# FASCICULE DE BREVET EUROPEEN

(11) **EP 4 357 215 B1**
(45) Date de publication et mention de la délivrance du brevet: **01.07.2026**
(21) Numéro de dépôt: 23203703.6
(22) Date de dépôt: 16.10.2023
(51) Int. Cl.: B61C 9/38, H02K 1/20

(54) **MOTEUR AUTO-VENTILÉ, NOTAMMENT POUR VÉHICULE FERROVIAIRE, VÉHICULE FERROVIAIRE COMPRENANT UN TEL MOTEUR ET PROCÉDÉ DE MONTAGE ASSOCIÉ**
SELBSTENTLÜFTENDER MOTOR, INSBESONDERE FÜR EIN SCHIENENFAHRZEUG, SCHIENENFAHRZEUG MIT EINEM SOLCHEN MOTOR UND MONTAGEVERFAHREN DAFÜR
SELF-VENTILATED MOTOR, IN PARTICULAR FOR A RAILWAY VEHICLE, RAILWAY VEHICLE COMPRISING SUCH A MOTOR AND ASSOCIATED ASSEMBLY METHOD

(30) Priorité: 17.10.2022 FR 2210659
(43) Date de publication de la demande: 24.04.2024
(73) Titulaire: ALSTOM Holdings, 93400 Saint-Ouen-sur-Seine (FR)
(72) Inventeur: PAULIN, Hervé, 25290 Ornans (FR)
(74) Mandataire: Plasseraud IP

(56) Documents cités:
- EP-A1- 3 358 722
- EP-A1- 3 819 148
- CA-A1- 2 325 722
- JP-A- 2005 333 795

## Description

La présente invention concerne un moteur auto-ventilé, notamment pour véhicule ferroviaire, ainsi qu'un véhicule ferroviaire comprenant un tel moteur. L'invention concerne aussi un procédé de montage associé à un tel moteur auto-ventilé.

Dans le domaine des véhicules ferroviaires, les moteurs de traction fournissent une forte puissance et ont tendance à chauffer. Des canaux de refroidissement sont ménagés dans la carcasse du moteur, et un flux d'air, généré par une hélice de ventilation portée directement sur un arbre de sortie du moteur, est poussé au travers de ces canaux pour refroidir le moteur, qui est ainsi dit moteur auto-ventilé.

Un tel moteur auto-ventilé a toutefois pour inconvénient d'être particulièrement bruyant. En effet, le flux d'air généré par l'hélice de ventilation est turbulent et est une source de bruit important.

Pour améliorer l'efficacité du refroidissement, il est connu d'acheminer le flux d'air généré par l'hélice jusqu'aux canaux par un passage d'air ménagé dans un carter à double paroi, les deux parois ménageant entre elles un passage pour le flux d'air généré par l'hélice de ventilation. Un tel carter est une pièce complexe, généralement fabriquée par fonderie, ce qui engendre des contraintes sur la structure du carter. Pour des raisons de solidité mécanique, des nervures internes, qui relient les deux parois, sont ménagées dans le passage d'air, ces nervures causant des pertes de charges dans le passage et étant sources de bruit. Pour le démoulage du carter, le passage d'air présente, à ses extrémités, des angles de dépouille divergents qui causent aussi des pertes de charge, constituant une source de bruit supplémentaire.

EP 3 819 148 décrit un moteur ventilé muni d'un dispositif de refroidissement comprenant un motoventilateur indépendant de l'arbre du moteur.

FR-3 042 757-A1 décrit, par exemple, un moteur auto-ventilé équipé d'un tel carter, le moteur étant aussi équipé d'accessoires de réduction du bruit. Cependant des accessoires sont relativement encombrants et ont pour fonction d'abattre le bruit généré par l'hélice et le carter, sans réduire le bruit à sa source.

C'est à ces problèmes qu'entend plus particulièrement remédier l'invention, en proposant un moteur auto-ventilé qui soit plus silencieux.

À cet effet, l'invention concerne un moteur auto-ventilé, notamment pour véhicule ferroviaire, conforme à la revendication 1.

Selon l'invention, le passage d'air présente une section de passage qui se réduit à mesure que l'on se déplace de l'entrée d'air vers la sortie d'air.

Grâce à l'invention, le passage d'air ne comprend pas de portion divergente générant des pertes de charges du flux d'air circulant dans le passage d'air. Le bruit généré par le flux d'air dans le passage d'air est ainsi réduit. Ainsi, le moteur auto-ventilé selon l'invention est plus silencieux que les moteurs auto-ventilés de l'art antérieur.
Le carter comprend un diffuseur, qui obture partiellement la sortie d'air de manière à canaliser dans les canaux le flux d'air circulant dans le passage d'air.

Le carter comprend aussi des ailettes de redressage, qui sont agencées dans le passage d'air en amont du diffuseur, les ailettes de redressage étant configurées pour orienter le flux d'air circulant dans le passage d'air parallèlement aux canaux.

Le diffuseur comprend des orifices, chaque orifice étant aligné avec un canal correspondant, deux orifices voisins étant séparés par une paroi, tandis que les ailettes de redressage sont réalisés d'une seule pièce avec le diffuseur, chaque paroi étant prolongé, au sein du passage d'air, par une ailette de redressage respective.

Selon des aspects avantageux mais non obligatoires de l'invention, un tel moteur auto-ventilé peut incorporer une ou plusieurs des caractéristiques suivantes prises isolément ou selon toute combinaison techniquement admissible :
- Le carter comprend :
   - un flasque, qui est porté par la carcasse et qui ménage une première surface formant une surface interne du passage d'air, le flasque et la carcasse formant un sous-ensemble de montage, et
   - un couvercle, qui est distinct du flasque, qui est fixé au sous-ensemble de montage et qui ménage une deuxième surface, la deuxième surface étant située en regard de la première surface lorsque le couvercle est fixé au sous-ensemble de montage et qui forme une surface externe du passage d'air,
   alors que la surface interne et la surface externe délimitent ensemble le passage d'air.
- Le flasque comprend une bride pour la fixation du flasque à la carcasse, la bride étant ménagée en périphérie du diffuseur, tandis que le couvercle est fixé au sous-ensemble de montage par l'intermédiaire de la bride.
- Le flasque est fabriqué par fonderie.
- Le carter comprend :
   - un flasque, qui est porté par la carcasse et qui ménage une première surface formant une surface interne du passage d'air, le flasque et la carcasse formant un sous-ensemble de montage, et
   - un couvercle, qui ménage une deuxième surface située en regard de la première surface, la surface interne et la surface externe délimitant ensemble le passage d'air,
   alors que le flasque et le couvercle sont fabriqués d'une seule pièce par fabrication additive.

L'invention concerne également un véhicule ferroviaire, comprenant une caisse et un moteur auto-ventilé tel que défini précédemment.

Selon un autre aspect, l'invention concerne aussi un procédé d'assemblage d'un moteur auto-ventilé tel que défini précédemment, le procédé comprenant les étapes suivantes :
a) assembler le flasque à la carcasse, de manière à former le sous-ensemble de montage, puis
b) assembler le couvercle au sous-ensemble de montage, de manière à former le passage d'air.

Ce procédé induit les mêmes avantages que ceux mentionnés au sujet du moteur auto-ventilé de l'invention
L'invention sera mieux comprise, et d'autres avantages de celle-ci apparaîtront plus clairement à la lumière de la description qui va suivre, d'un mode de réalisation d'un moteur auto-ventilé, d'un véhicule ferroviaire et d'un procédé de montage, conformes à son principe, donnée uniquement à titre d'exemple et faite en référence aux dessins annexés, dans lesquels :
- la figure 1 est une représentation schématique d'un véhicule ferroviaire conforme à l'invention, comprenant un moteur auto-ventilé lui-aussi conforme à l'invention ;
- la figure 2 est une coupe du moteur auto-ventilé de la figure 1 ;
- la figure 3 est une vue en perspective éclatée d'une carcasse et d'un carter du moteur auto-ventilé de la figure 1, et
- la figure 4 représente, à plus grande échelle, un détail de la carcasse et du carter du moteur auto-ventilé de la figure 2, repéré par un cadre IV à la figure 2.

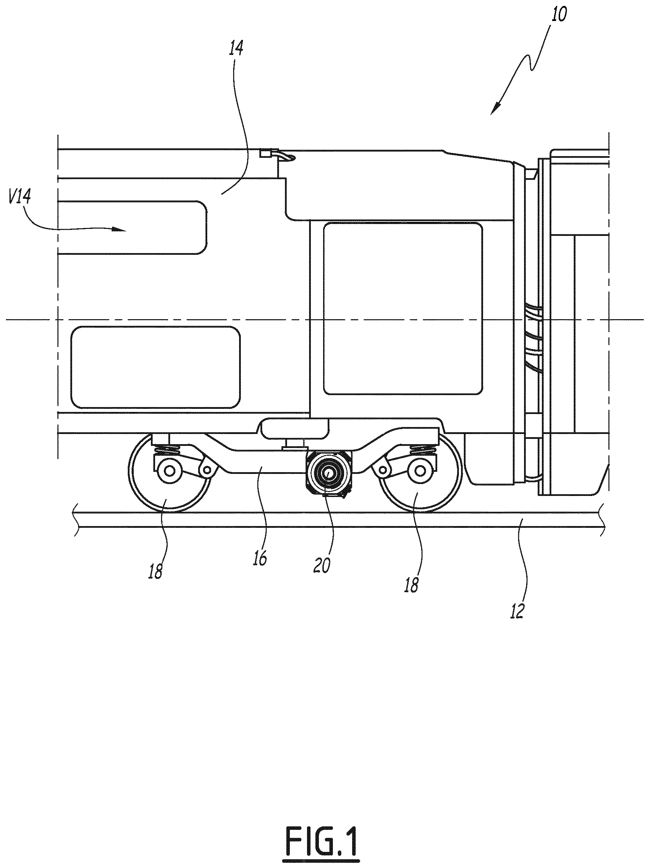

Un véhicule ferroviaire 10 est représenté schématiquement sur la figure 1. Le véhicule ferroviaire 10, dit aussi simplement « véhicule 10 » dans la suite, circule sur des rails 12 qui sont ici supposés rectilignes et horizontaux. Le véhicule 10 comprend une caisse 14, qui ménage un volume interne V14. Le volume interne V14 est ici un compartiment accueillant des passagers.

La caisse 14 repose sur des bogies. Un seul bogie 16 est représenté sur la figure 1. Ce bogie 16 comprend des roues 18, qui roulent sur les rails 12. Certaines des roues 18 sont entrainées par un moteur 20, qui est porté par le bogie 16. Le moteur 20 est un moteur électrique, qui est alimenté en énergie électrique au moyen d'une alimentation électrique. L'alimentation électrique n'est pas représentée.

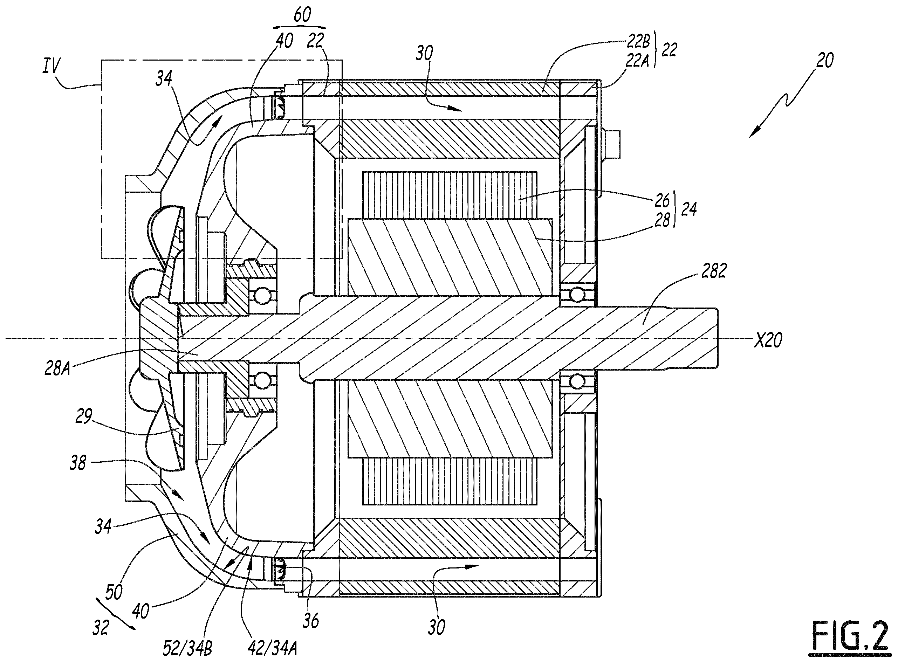

On décrit à présent le moteur 20 à l'aide des figures 2 à 4.

Le moteur 20 comporte une carcasse 22, dans laquelle sont logés des organes de motorisation 24.

Les organes de motorisation 24 comportent un stator 26 fixé à la carcasse 22 et un rotor 28 avec un arbre 282. L'arbre 282 est solidaire du rotor 28 et est mobile en rotation par rapport à la carcasse 22 autour d'un axe principal X20. L'axe principal X20 est aussi un axe longitudinal du moteur 20.

L'arbre 282 comprend une extrémité avant 28A, ici située sur la gauche de la figure 2, sur laquelle est montée une hélice 29 de ventilation. Ainsi, lorsque l'arbre 282 est en rotation, lors du fonctionnement normal du moteur, l'hélice 29 est également en rotation et génère un flux d'air qui sert au refroidissement du moteur 20, comme expliqué plus loin. Le moteur 20 est ainsi un moteur dit « auto-ventilé », c'est-à-dire qui génère son propre air de refroidissement, sans nécessiter la mise en place d'un dispositif de refroidissement supplémentaire.

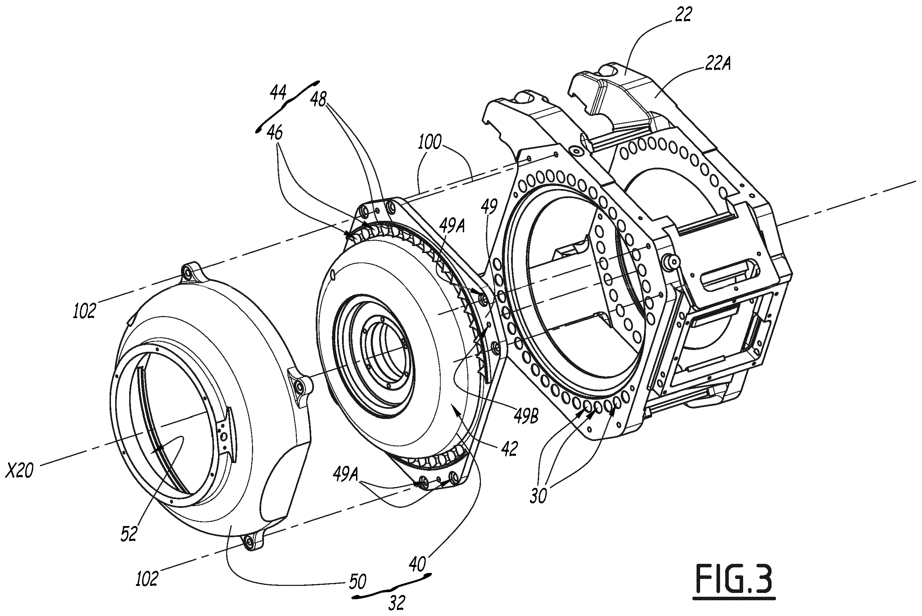

La carcasse 22 comprend ici un berceau 22A sur lequel est monté un tambour 22B. Sur la figure 3, seul le berceau 22A est représenté. Le berceau 22A sert, entre autres, à la fixation du moteur 20 au bogie 16, tandis que le tambour 22B forme une enceinte périphérique du moteur 20, qui reçoit et protège les organes de motorisation 24.

En fonctionnement, le moteur 20 tend à chauffer. La carcasse 22 présente des canaux 30 de circulation d'air, qui s'étendent parallèlement à l'axe principal X20 et qui sont prévus pour le refroidissement du moteur 20 au cours de son fonctionnement. Les canaux 30 sont donc des canaux de refroidissement du moteur 20, qui sont ménagés dans la carcasse 22. Dans l'exemple illustré, les canaux 30 s'étendent ainsi au travers du berceau 22A et du tambour 22B. Les canaux 30 sont répartis autour de l'axe principal X20, seuls deux canaux 30 étant visibles dans le plan de coupe de la figure 2.

Avantageusement, les canaux 30 présentent chacun une section de surface constante, de préférence une section circulaire, de manière à ne pas générer de perte de charge lorsqu'un flux d'air circule dans ces canaux 30, et ainsi limiter la génération de bruit dans les canaux 30.

Le moteur 20 comprend aussi un carter 32, qui est fixé à la carcasse 22 et dans lequel est ménagée une cavité formant un passage d'air 34. Le passage d'air 34 débouche du carter 32 par une sortie d'air 36, qui débouche dans les canaux 30. Le passage d'air 34 comprend également une entrée d'air 38, qui est reliée à la sortie d'air 36 par le passage d'air 34. L'entrée d'air 38 est agencée en regard de l'hélice 29, de manière à recevoir l'essentiel du flux d'air généré par l'hélice 29 en rotation. Ainsi, le flux d'air, généré par l'hélice 29, pénètre dans le passage d'air 34 par l'entrée d'air 38, circule dans le passage d'air 34, en sort par la sortie d'air 36 et passe ensuite dans les canaux 30.

Dans l'exemple et de façon avantageuse, l'entrée d'air 38 entoure l'hélice 29, radialement à l'axe principal X20.

Dans l'exemple illustré, le carter 32 comprend un flasque 40 et un couvercle 50, qui sont des pièces distinctes et qui sont assemblés l'un à l'autre de manière à ménager entre eux le passage d'air 34.

Le flasque 40 est porté par la carcasse 22 et comprend une première surface 42, qui forme une surface interne 34A du passage d'air 34. Le flasque 40 est avantageusement fabriqué par fonderie, ce procédé de fabrication étant économique à mettre en œuvre. Lorsque le flasque 40 et assemblé à la carcasse 22, le flasque 40 et la carcasse 22 forment ensemble un sous-ensemble de montage 60.

Le couvercle 50 est fixé au sous-ensemble de montage 60 et comprend une deuxième surface 52, qui est située en regard de la première surface 42 lorsque le couvercle 40 est fixé au sous-ensemble de montage 60 et qui forme une surface externe 34B du passage d'air 34. Le couvercle 50 est avantageusement fabriqué par fonderie.

On comprend donc que le passage d'air 34 est délimité par la première surface 42 et par la deuxième surface 52 en regard. Les formes des première et deuxième surfaces 42 et 52 peuvent ainsi être choisies avec plus de liberté par rapport aux carters de l'art antérieur, fabriqués d'une seule pièce par fonderie.

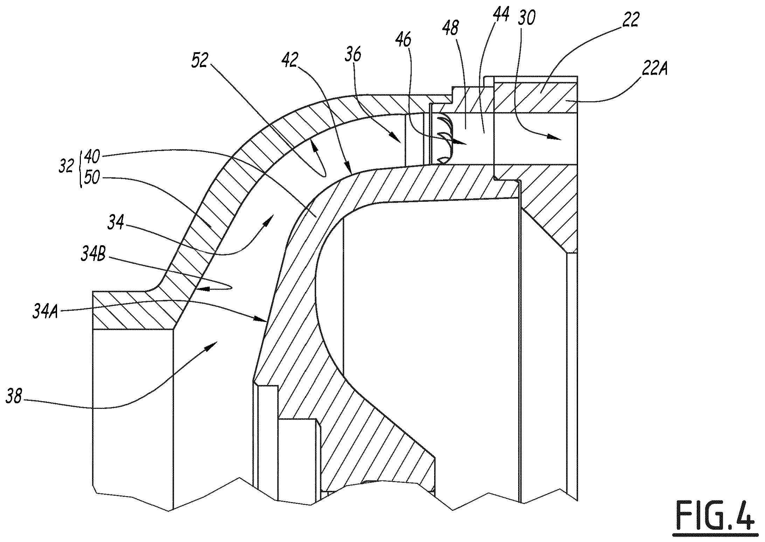

Les première et la deuxième surfaces 42 et 52 ont ici globalement la forme de surfaces de révolution autour de l'axe principal X20. Le passage d'air 34 est donc ici un volume de révolution autour de l'axe principal X20. À mesure que l'on se déplace de l'entrée d'air 38 vers la sortie d'air 36, les première et la deuxième surfaces 42 et 52 se rapprochent l'une de l'autre, comme illustré sur les figures 2 et 4, où le carter 32 est représenté en coupe. Ainsi, le passage d'air 34 présente une section de passage qui se réduit à mesure que l'on se déplace de l'entrée d'air 38 vers la sortie d'air 36. On limite les pertes de charges dans le passage d'air 34, ce qui résulte en une réduction du bruit généré par le moteur 20 en fonctionnement.

On entend que la section de passage se réduit à mesure que l'on se déplace de l'entrée d'air 38 vers la sortie d'air 36 en ce sens que la section de passage d'air 34 présente une aire dont la valeur est décroissante dans le sens de circulation de l'air entre l'entrée d'air 38 et la sortie d'air 36.

Avantageusement, le passage d'air 34 présente une section de passage qui se réduit de manière monotone à mesure que l'on se déplace de l'entrée d'air 38 vers la sortie d'air 36. Par monotone, on entend que pour deux points quelconques situées entre l'entrée d'air 38 et la sortie d'air 36, avec un premier des deux points étant plus proche de la sortie d'air que le deuxième point, la section de passage au niveau du premier point est strictement inférieure à la section de passage au niveau du deuxième point.

Le flasque 40 comprend avantageusement un diffuseur 44, qui obture partiellement la sortie d'air 36 de manière à canaliser le flux d'air circulant dans le passage d'air 34 vers les canaux 30. La transition entre le passage d'air 34 et les canaux 30 est ainsi progressive, ce qui réduit les turbulences du flux d'air entrant dans les canaux 30, et donc réduit la génération de bruit.

Dans l'exemple illustré, le diffuseur 44 comprend des orifices 46, chaque orifice 46 étant aligné avec un canal 30 respectif, deux orifices 46 voisins étant séparés par une paroi 48. La paroi 48 est profilée, pour que la section de passage de l'air se réduise progressivement entre le passage d'air 34 et chacun des canaux 30.

Le flasque 40 comprend une bride 49, qui est ici ménagée en périphérie du diffuseur 44 et qui sert à la fixation du flasque 40 à la carcasse 22. Le flasque 40 est ici assemblé à la carcasse 22 au moyen de vis 100 représentées par leurs traits d'axe pour certaines d'entre elles, qui coopèrent avec des premiers trous 49A ménagés dans la bride 49.

Dans l'exemple illustré, chaque bride 49 comprend quatre jeux de deux premiers trous 49A, tandis qu'un deuxième trou 49B est aussi ménagé dans la bride 49, entre les premiers trous 49A de chaque jeu de deux premiers trous. Seuls trois jeux de deux premiers trous 49A sont visibles à la figure 3, mais la position du quatrième se déduit du fait qu'ils sont régulièrement répartis autour de l'axe principal X20. En variante, le nombre de jeux de deux premiers trous 49A est différent de quatre.

Le deuxième trou 49B est ici taraudé et sert à l'assemblage, au moyen de vis 102 représentées par leurs traits d'axe pour certaines d'entre elles, du couvercle 50 au flasque 40. Autrement dit, lorsque le flasque 40 est fixé à la carcasse 22, formant le sous-ensemble de montage 60, le couvercle 50 est fixé au sous-ensemble de montage 60 par l'intermédiaire de la bride 49.

Le carter 32, et par extension le moteur 20, est ainsi assemblé suivant un procédé d'assemblage comprenant les étapes suivantes :
a) assembler le flasque 40 à la carcasse 22, de manière à former le sous-ensemble de montage 60, puis
b) assembler le couvercle 50 au sous-ensemble de montage 60, de manière à former le passage d'air 34.

Au cours de l'étape a), les orifices 46 du diffuseur 44 sont alignés avec les canaux 30 correspondants avant de sécuriser l'assemblage du flasque 40 à la carcasse 22. Au cours de l'étape b), la deuxième surface 52 est agencée en regard de la première surface 42, formant le passage d'air 34.

Dans l'exemple illustré, les première et deuxième surfaces 42 et 52 sont des surfaces de révolution autour de l'axe principal A20. Cependant, le flux d'air généré par l'hélice 29 est tourbillonnaire et circule dans le passage d'air 34 avec une composante orthoradiale à l'axe principal A20.

En variante non représentée, le carter 32 comprend avantageusement des ailettes de redressage, qui sont ménagées en saillie sur l'une et/ou l'autre parmi la première surface 42 et la deuxième surface 52, les ailettes de redressage étant configurées pour orienter le flux d'air circulant dans le passage d'air 34 parallèlement aux canaux d'air 30. Autrement dit, les ailettes de redressage servent à supprimer la composante orthoradiale du flux d'air dans le passage d'air 34.

Dans l'exemple illustré, le carter 32 est réalisé par fonderie, ce qui est économique mais impose de fabriquer le flasque 40 et le couvercle 50 en deux pièces distinctes. Ceci a pour avantage de libérer l'accès au passage d'air 34, et ainsi permet de réalise les ailettes de redressages d'une seule pièce avec le flasque 40. La forme des ailettes de redressage peut ainsi être conçue principalement en fonction des contraintes de réduction de bruit. Par exemple, les ailettes de redressage du moteur selon l'invention sont incurvées. De préférence, les ailettes de redressage sont réalisées d'une seule pièce avec le diffuseur 44, chaque paroi 48 étant prolongée, au sein du passage d'air 34, par une ailette de redressage respective. Autrement dit, les ailettes de redressages sont ménagées en saillie sur la première surface 42 lors de la fabrication du flasque 40.

En variante non représentée, le carter est réalisé d'une seule pièce, par exemple par fabrication additive, dite aussi « impression 3D », ce procédé de fabrication étant plus onéreux que la fonderie mais offrant une plus grande liberté quant aux formes des pièces à fabriquer. Il est ainsi possible de fabriquer d'une seule pièce un carter ménageant un passage d'air qui présente une section de passage qui se réduit à mesure que l'on se déplace de l'entrée d'air vers la sortie d'air.

Les modes de réalisation et les variantes mentionnées ci-dessus peuvent être combinés entre eux pour générer de nouveaux modes de réalisation de l'invention, pour autant que ces combinaisons demeurent dans le cadre des revendications annexées.

## Revendications

1. Moteur (20) auto-ventilé, notamment pour véhicule ferroviaire (10), comprenant :
- une carcasse (22), qui loge des organes de motorisation (24) comprenant un arbre (282) pivotant par rapport à la carcasse (22), et dans laquelle sont ménagés des canaux (30) de refroidissement,
- un carter (32), qui est fixé à la carcasse (22), dans lequel est ménagé un passage d'air (34) et qui comprend :
• une sortie d'air (36), qui débouche dans les canaux (30),
• une entrée d'air (38), reliée à la sortie d'air (36) par le passage d'air (34),
- une hélice (29) de ventilation configurée pour générer un flux d'air entrant dans l'entrée d'air (38) et circulant dans le passage d'air (34),
dans lequel le passage d'air (34) présente une section de passage qui se réduit à mesure que l'on se déplace de l'entrée d'air (38) vers la sortie d'air (36),
**caractérisé en ce que** :
- l' hélice (29) de ventilation est liée en rotation à l'arbre (282),
- le carter (32) comprend un diffuseur (44), qui obture partiellement la sortie d'air (36) de manière à canaliser dans les canaux (30) le flux d'air circulant dans le passage d'air (34) et des ailettes de redressage réalisées d'une seule pièce avec le diffuseur (44) et agencées dans le passage d'air (34) en amont du diffuseur (44), les ailettes de redressage étant configurées pour orienter le flux d'air circulant dans le passage d'air (34) parallèlement aux canaux (30),
le diffuseur (44) comprenant des orifices (46), chaque orifice étant aligné avec un canal (30) correspondant, deux orifices voisins étant séparés par une paroi (48), chaque paroi (48) étant prolongé, au sein du passage d'air (34), par une ailette de redressage respective.

2. Moteur (20) auto-ventilé selon la revendication 1, dans lequel :
- le carter (32) comprend :
• un flasque (40), qui est porté par la carcasse (22) et qui ménage une première surface (42) formant une surface interne (34A) du passage d'air (34), le flasque et la carcasse formant un sous-ensemble de montage (60), et
• un couvercle (50), qui est distinct du flasque (40), qui est fixé au sous-ensemble de montage (60) et qui ménage une deuxième surface (52), la deuxième surface étant située en regard de la première surface (42) lorsque le couvercle (50) est fixé au sous-ensemble de montage (60) et qui forme une surface externe (34B) du passage d'air (34),
- la surface interne (34A) et la surface externe (34B) délimitent ensemble le passage d'air (34).

3. Moteur (20) auto-ventilé selon la revendication 2, dans lequel :
- le flasque (40) comprend une bride (49) pour la fixation du flasque à la carcasse (22), la bride étant ménagée en périphérie du diffuseur (44),
- le couvercle (50) est fixé au sous-ensemble de montage (60) par l'intermédiaire de la bride.

4. Moteur (20) auto-ventilé selon l'une quelconque des revendications 2 ou 3, dans lequel le flasque (40) est fabriqué par fonderie.

5. Moteur (20) auto-ventilé selon la revendication 1, dans lequel :
- le carter (32) comprend :
• un flasque (40), qui est porté par la carcasse (22) et qui ménage une première surface (42) formant une surface interne du passage d'air (34), le flasque et la carcasse (22) formant un sous-ensemble de montage, et
• un couvercle (50), qui ménage une deuxième surface (52) située en regard de la première surface (42), la surface interne (34A) et la surface externe (34B) délimitant ensemble le passage d'air (34),
- le flasque (40) et le couvercle (50) sont fabriqués d'une seule pièce par fabrication additive.

6. Véhicule ferroviaire (10), comprenant une caisse (14) et un moteur (20) auto-ventilé selon l'une quelconque des revendications précédentes.

7. Procédé d'assemblage d'un moteur (20) auto-ventilé conforme à l'une quelconque des revendications 2 ou 3, le procédé comprenant les étapes suivantes :
a) assembler le flasque (40) à la carcasse (22), de manière à former le sous-ensemble de montage (60), puis
b) assembler le couvercle (50) au sous-ensemble de montage (60), de manière à former le passage d'air (34).

## Patentansprüche

1. Selbstbelüfteter Motor (20), insbesondere für ein Schienenfahrzeug (10), umfassend:
- ein Gerüst (22), das Motorisierungselemente (24), umfassend eine relativ zum Gerüst (22) drehbare Welle (282) aufnimmt und in dem Kühlkanäle (30) ausgebildet sind,
- ein Gehäuse (32), das an dem Gerüst (22) befestigt ist, in dem ein Luftkanal (34) ausgebildet ist und das umfasst:
• einen Luftauslass (36), der in die Kanäle (30) mündet,
• einen Lufteinlass (38), der über den Luftkanal (34) mit dem Luftauslass (36) verbunden ist,
- einen Lüftungsflügel (29), der dazu ausgebildet ist, einen Luftstrom zu erzeugen, der in den Lufteinlass (38) eintritt und durch den Luftkanal (34) strömt,
wobei der Luftkanal (34) einen Durchgangsquerschnitt aufweist, der sich von der Lufteinlassöffnung (38) zur Luftauslassöffnung (36) hin verjüngt,
**dadurch gekennzeichnet, dass**:
- der Lüftungsflügel (29) drehfest mit der Welle (282) verbunden ist,
- das Gehäuse (32) einen Diffusor (44) umfasst, der den Luftauslass (36) teilweise verschließt, um den in dem Luftkanal (34) strömenden Luftstrom in die Kanäle (30) zu leiten, und Ausrichtungslamellen, die einstückig mit dem Diffusor (44) ausgebildet und im Luftkanal (34) stromaufwärts des Diffusors (44) angeordnet sind, wobei die Ausrichtungslamellen dazu ausgebildet sind, den im Luftkanal (34) strömenden Luftstrom parallel zu den Kanälen (30) auszurichten,
wobei der Diffusor (44) Öffnungen (46) umfasst, wobei jede Öffnung mit einem entsprechenden Kanal (30) ausgerichtet ist, wobei zwei benachbarte Öffnungen durch eine Wand (48) getrennt sind, wobei jede Wand (48) innerhalb des Luftkanals (34) durch eine jeweilige Ausrichtungslamelle verlängert ist.

2. Selbstbelüfteter Motor (20) nach Anspruch 1, wobei:
- das Gehäuse (32) umfasst:
• einen Flansch (40), der von dem Gerüst (22) getragen wird und eine erste Fläche (42) aufweist, die eine Innenfläche (34A) des Luftkanals (34) bildet, wobei der Flansch und das Gehäuse eine Montagebaugruppe (60) bilden, und
• einen Deckel (50), der vom Flansch (40) getrennt ist und an der Montagebaugruppe (60) befestigt ist und eine zweite Fläche (52) bildet, wobei die zweite Fläche gegenüber der ersten Fläche (42) liegt, wenn der Deckel (50) an der Montagebaugruppe (60) befestigt ist, und die eine Außenfläche (34B) des Luftkanals (34) bildet,
- wobei die Innenfläche (34A) und die Außenfläche (34B) gemeinsam den Luftkanal (34) begrenzen.

3. Selbstbelüfteter Motor (20) nach Anspruch 2, wobei:
- der Flansch (40) eine Schelle (49) zur Befestigung des Flansches am Gerüst (22) umfasst, wobei die Schelle am Umfang des Diffusors (44) ausgebildet ist,
- der Deckel (50) über die Schelle an der Montagebaugruppe (60) befestigt ist.

4. Selbstbelüfteter Motor (20) nach einem der Ansprüche 2 oder 3, wobei der Flansch (40) im Gussverfahren hergestellt ist.

5. Selbstbelüfteter Motor (20) nach Anspruch 1, wobei:
- das Gehäuse (32) umfasst:
• einen Flansch (40), der von dem Gerüst (22) getragen ist und eine erste Fläche (42) bildet, die eine Innenfläche des Luftkanals (34) bildet, wobei der Flansch und das Gerüst (22) eine Montagebaugruppe bilden, und
• einen Deckel (50), der eine zweite Fläche (52) bildet, die der ersten Fläche (42) gegenüberliegt, wobei die Innenfläche (34A) und die Außenfläche (34B) gemeinsam den Luftkanal (34) begrenzen,
- wobei der Flansch (40) und der Deckel (50) durch additive Fertigung aus einem Stück hergestellt sind.

6. Schienenfahrzeug (10), umfassend einen Wagenkasten (14) und einen selbstbelüfteten Motor (20) nach einem der vorstehenden Ansprüche.

7. Verfahren zum Zusammenbau eines selbstbelüfteten Motors (20) nach einem der Ansprüche 2 oder 3, wobei das Verfahren die folgenden Schritte umfasst:
a) Zusammenbau des Flansches (40) mit dem Gerüst (22), um die Montagebaugruppe (60) zu bilden, und anschließend
b) Zusammenbau des Deckels (50) mit der Montagebaugruppe (60), um den Luftkanal (34) zu bilden.

## Claims

1. Self-ventilated motor (20), especially for a rail vehicle (10), comprising:
- a frame (22), which houses motor components (24) comprising a shaft (282) pivoting relative to the frame (22), and in which cooling channels (30) are provided,
- a casing (32), which is attached to the frame (22), in which an air passage (34) is provided and which comprises:
• an air outlet (36), which opens into the channels (30),
• an air inlet (38), connected to the air outlet (36) by the air passage (34),
- a ventilation propeller (29) configured to generate an air flux entering the air inlet (38) and circulating in the air passage (34),
wherein the air passage (34) has a passage cross-sectional area decreasing from the air inlet (38) to the air outlet (36),
**characterised in that**:
- the ventilation propeller (29) is rotatably connected to the shaft (282),
- the casing (32) comprises a diffuser (44), which partially seals the air outlet (36) so as to channel, in the channels (30), the air flux circulating in the air passage (34) and straightening fins made as a single piece with the diffuser (44) and arranged in the air passage (34) upstream of the diffuser (44), the straightening fins being configured to orient the air flux circulating in the air passage (34) in parallel to the channels (30),
the diffuser (44) comprising ports (46), each port being aligned with a corresponding channel (30), two neighbouring ports being separated by a wall (48), each wall (48) extending, within the air passage (34), to a respective straightening fin.

2. Self-ventilated motor (20) according to claim 1, wherein:
- the casing (32) comprises:
• a flange (40), which is carried by the frame (22) and which provides a first surface (42) forming an inner surface (34A) of the air passage (34), the flange and the frame forming a mounting subassembly (60), and
• a cover (50), which is distinct from the flange (40), which is attached to the mounting subassembly (60) and which provides a second surface (52), the second surface being located opposite the first surface (42) when the cover (50) is attached to the mounting subassembly (60) and which forms an outer surface (34B) of the air passage (34),
- the inner surface (34A) and the outer surface (34B) together delimit the air passage (34).

3. Self-ventilated motor (20) according to claim 2, wherein:
- the flange (40) comprises a clamp (49) for attaching the flange to the frame (22), the clamp being provided at the periphery of the diffuser (44),
- the cover (50) is attached to the mounting subassembly (60) via the clamp.

4. Self-ventilated motor (20) according to any one of claims 2 or 3, wherein the flange (40) is manufactured by foundry.

5. Self-ventilated motor (20) according to claim 1, wherein:
- the casing (32) comprises:
• a flange (40), which is carried by the frame (22) and which provides a first surface (42) forming an inner surface of the air passage (34), the flange and the frame (22) forming a mounting subassembly, and
• a cover (50), which provides a second surface (52) located opposite the first surface (42), the inner surface (34A) and the outer surface (34B) together delimiting the air passage (34),
- the flange (40) and the cover (50) are manufactured as a single piece by additive manufacturing.

6. Railway vehicle (10), comprising a body (14) and a self-ventilated motor (20) according to any one of the preceding claims.

7. Method for assembling a self-ventilated motor (20) according to any one of claims 2 or 3, the method comprising the following steps of:
a) assembling the flange (40) to the frame (22), so as to form the mounting subassembly (60), and then
b) assembling the cover (50) to the mounting subassembly (60), so as to form the air passage (34).
